# EUROPEAN PATENT APPLICATION

(11) **EP 2 040 441 A1**
(43) Date of publication of application: **25.03.2009**
(21) Application number: 08101491.2
(22) Date of filing: 11.02.2008
(51) Int. Cl.: H04M 1/02

(54) **Base station of a cordless telephone system**

(30) Priority: 21.09.2007 IT TO20070663
(71) Applicant: Urmet Telecomunicazioni S.p.A., 10154 Torino (IT)
(72) Inventor: Mondardini, Massimo, 10154, TORINO (IT)
(74) Representative: Robba, Pierpaolo

(57) **Abstract**

A base station (master) (13) of a cordless telephone system (11), which base station can be associated with a cordless mobile telephone set or handset (81) (slave) and is equipped at least with: a support structure (33); a power supply unit (17); a radio transceiving unit (19); an interface (21) for communication with the telephone network; an LCD (Liquid Crystal Display) display (23); a frame (43) associated with said casing (37) and surrounding said display (23); an electronic control assembly (45), including at least one pushbutton set (47) for actuating the functions of said base station (13); an electronic unit (29) controlling the functions of said base station (13); an image collecting unit (61), associated with a communication port (63a, 63b) and/or a storage unit (65); wherein said collecting unit (61) is associated with said unit (29) controlling the functions of the base station (13) and with said control assembly (45), and wherein said collecting unit (61) is programmed for displaying, through said display (23), images collected through said communication port (63a, 63b) or available in said storage unit (65).

## Description

The present invention relates to a base station of a cordless telephone system.

More precisely, the invention relates to a base station that can be associated with a cordless telephone system of the type including a base station (master) and at least one mobile telephone set, or handset, of cordless type (slave).

As known, in cordless telephone systems, for instance of the kind operating in accordance with the DECT (Digital Enhanced Cordless Telecommunications) standard, the base station acts as an interface between the telephone network, with which it is generally associated through a wireline connection, and one or more mobile sets, communicating with the base station via radio.

In the field of telephony, enhanced telephone sets have been recently proposed, which are equipped with units and electronic circuits capable of displaying, on a display, images collected through a television camera and/or coming from the telephone network.

By using said sets, two users having set up a telephone communication, which once was capable only of transferring an audio signal, can thus exchange also video images on the respective display.

Images displayed in known telephone sets embodying such display functions are however of poor quality, also due to the light conditions to which the telephone sets are generally exposed and which often are not optimum.

Moreover, in a telephone set, the only function of displaying the image of a person one is speaking with generally does not justify the costs of sophisticated equipment, with high performance in terms of image quality.

For this reason, telephone sets at present known, embodying image display functions, have poor performance while having a high cost for the purchaser.

It is therefore a first object of the present invention to provide a base station of a cordless telephone system, e.g. of the kind operating in accordance with the DECT (Digital Enhanced Cordless Telecommunications) standard, which has additional and improved functions.

It is another object of the invention to provide a base station of a cordless telephone system, which station enables exploiting said functions even under non-optimum light conditions.

It is a further object of the invention to provide a station of the above kind, which can be manufactured in simple and cheap manner.

The above and other objects are achieved by means of the base station of a cordless telephone system as claimed in the appended claims.

Advantageously, since the base station according to the invention embodies a set of additional and improved functions, useful for the user, such a station can be built by using devices capable of producing high quality images even under non-optimum light conditions.

Advantageously, said base station is capable of displaying information and images that either come from the telephone network, irrespective of whether the network is an analogue or digital, narrowband or broadband network, or are resident in the station or in the mobile handset, and thus the station can be used as an electronic photo album or photo-frame.

A preferred embodiment of the invention will be described only by way of non limiting example with reference to the accompanying Figures, in which:
- Fig. 1 is a block diagram of a cordless telephone system equipped with a prior art base station;
- Fig. 2 is a schematic front view of a base station according to the invention;
- Fig. 3 is a block diagram of the base station according to the invention;
- Fig. 4 is a block diagram of the function of backlighting control by means of the motion detector.

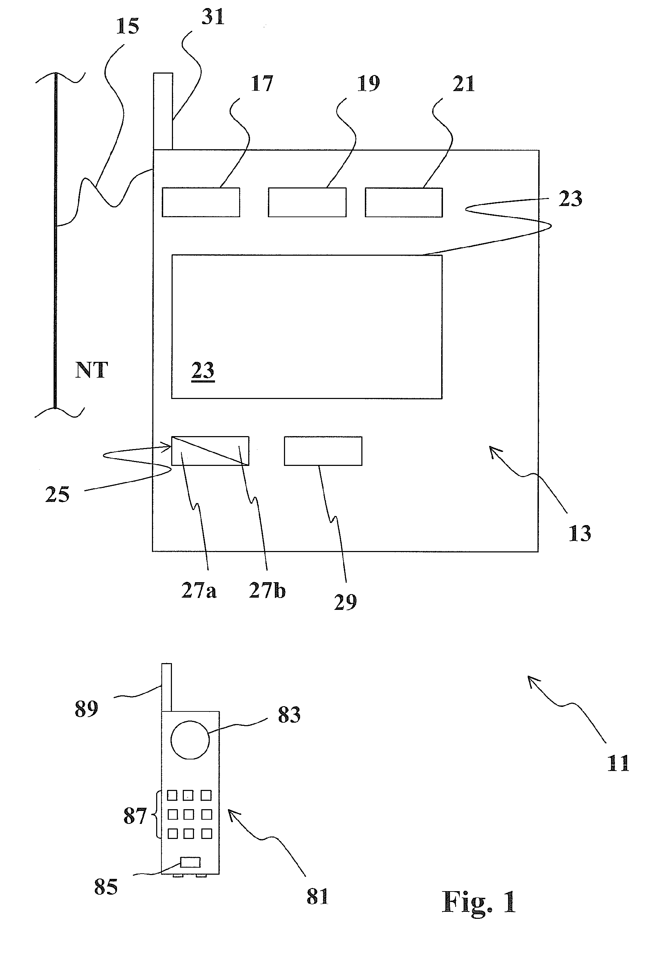

Referring to Fig. 1, a cordless telephone system, generally denoted by reference numeral 11, includes a base station (master) 13 associated with a telephone network NT, generally a public telephone network, through a wireline connection 15, and at least one mobile handset (slave) 81.

Still referring to Fig. 1, base station 13 comprises a power supply unit 17, for supplying the circuits of station 13 with electric power through the electric mains, a radio transceiving unit 19 for communication with said at least one handset 81, a communication interface 21 for communication with the telephone network, a display 23, preferably of LCD (Liquid Crystal Display) type, for displaying text and graphics to the user, an audio playing system 25 for playing voice and sounds and having a loudspeaker 27a and preferably a microphone 27b, for enabling use of the base station in the so-called hands-free mode, and an electronic unit 29 controlling the functions of base station 13.

Mobile handset 81 generally comprises a power supply unit (not shown), including rechargeable accumulators, for supplying the circuits in handset 81 with electric power, a radio transceiving unit (not shown) for communication with said base station 13, a loudspeaker 83 and a microphone 25 for playing and collecting voice, an electronic unit controlling the functions of handset 81, and a keyboard 87.

Base station 13 and mobile handset 81 further have a corresponding antenna 31 and 89, respectively.

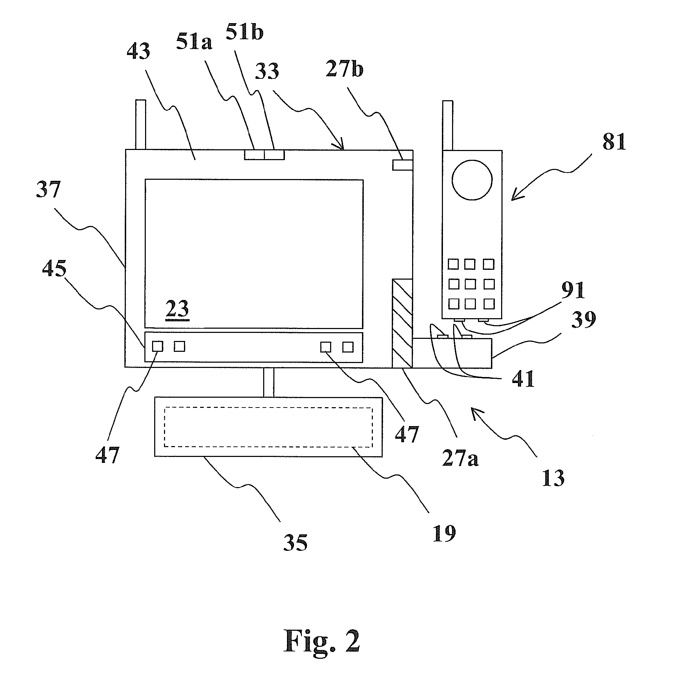

Referring now to Fig. 2, base station 13 according to the invention is housed within a support structure 33 that, in the illustrated example, includes a pedestal 35 and a casing 37.

According to the invention, radio transceiving unit 19 necessary for communication with said at least one mobile handset 81 is advantageously housed within said pedestal 35 so as to prevent shielding of radio waves due to the presence of display 23, which generally is equipped with a metal plane on the face opposite to the displaying face.

A seat 39 capable of receiving handset 81 when the latter is not being used is associated with support structure 33. Moreover, said seat preferably has contacts 41, cooperating with corresponding contacts 91 provided on mobile handset 81, for recharging the accumulators in handset 81.

Casing 37 houses display 23 that, according to the invention, is preferably of the backlit liquid crystal (LCD) type and is surrounded by a protecting frame 43, preferably integrated into support structure 37, and an electronic control assembly 45 (i.e., comprising a set of electronic devices and circuits, preferably in integrated form), including pushbuttons 47 for actuating the functions of base station 13, as it will become apparent from the following description.

Advantageously, according to the invention, frame 43 can be made so that display 23 has the appearance of a photo holder. Such effect can be achieved for instance by making the frame with a colour contrasting with that of casing 37, and/or by associating special decorations with the frame, and/or by making the frame of a valuable material.

Always in accordance with the invention, support structure 33 preferably has a vertical development and a reduced thickness, and seat 39 is preferably cantilevered on one side of structure 33, at the bottom thereof, so that handset 81 can be placed with one side parallel to one side of said support structure and the overall size is reduced.

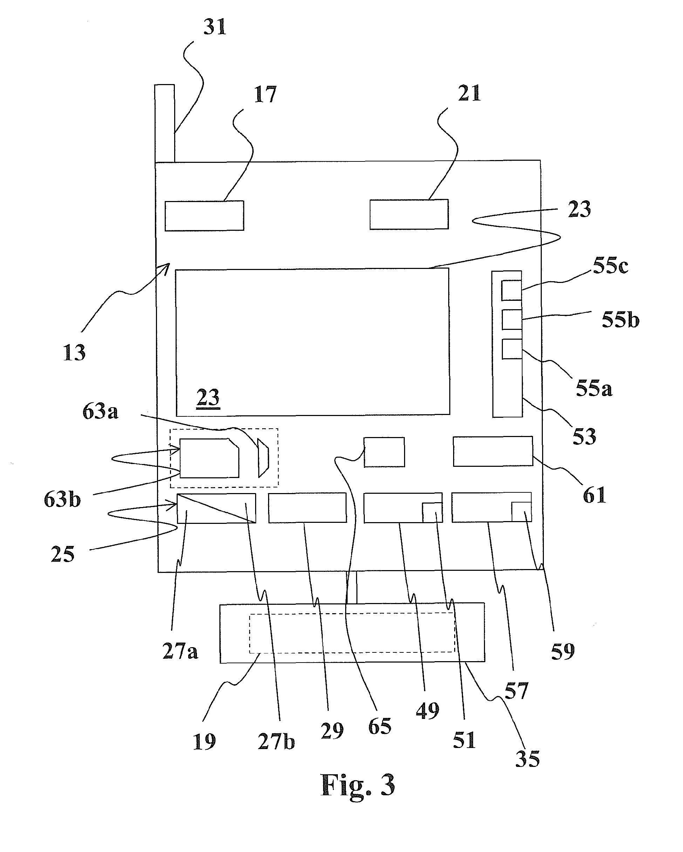

Referring to Fig. 3, base station 13 advantageously has an electronic unit 49 for activation, deactivation and automatic adjustment of the backlighting function of LCD display 23, which unit is associated with a brightness detector 51a, preferably frontally located in support structure 37, as shown in Fig. 2. Thanks to such electronic unit 49 for activation, deactivation and automatic adjustment of the backlighting function of the LCD display, it is possible to obtain an optimum display of the images, by increasing the backlighting intensity under strong illumination conditions, as well as an energy saving when backlighting is not necessary.

Said electronic unit 49 for activation, deactivation and automatic adjustment of the backlighting function of the LCD display is further associated with a motion detector 51b, for instance an infrared detector, it too preferably frontally located in support structure 37, as shown in Fig. 2.

Said detector 51b has the task of reducing consumption and increasing the life duration of the display and it is preferably associated with a switch (not shown), by means of which the user can activate or deactivate such backlighting control function depending on the motion. Said electronic unit 49 is so programmed that, when the motion detector is operating, i.e. after the user has turned it on by means of said switch, backlighting of the LCD display is deactivated if no motion is detected over a given time interval in the environment where detector 51b operates.

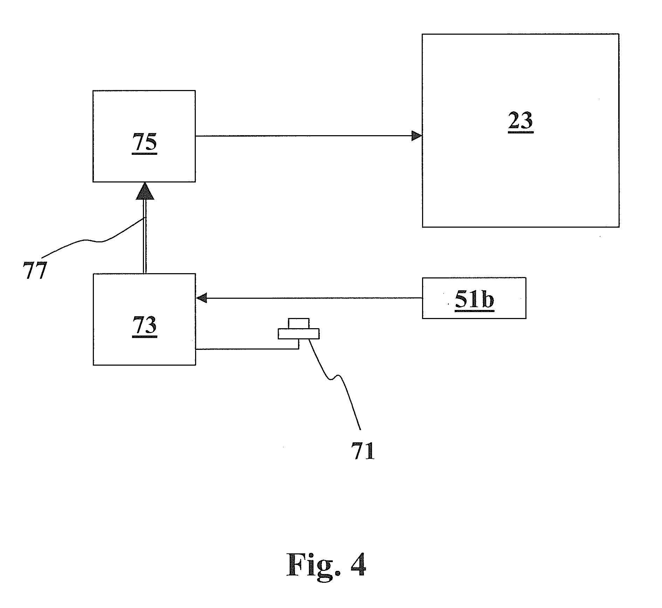

Fig. 4 schematically shows an embodiment of the function of backlighting control by means of said motion detector 51b.

In Fig. 4, reference numeral 71 denotes a pushbutton for activating/deactivating the backlighting control function depending on the motion detected in the surrounding environment, reference numeral 73 denotes a unit for receiving, managing and encoding the received IRDA signals, reference numeral 75 denotes a processor controlling display 23 and connected for instance to unit 73 through a unidirectional serial connection 77, reference numeral 51b denotes the motion detector and reference numeral 23 denotes the display.

The movement of a person in the environment where detector operates is detected by detector 51b that transmits the relevant information to unit 73, which processes such information and sends it to processor 75. Under such conditions, processor 75 keeps the power supply for display 23, in particular for the backlighting of said display 23, in the "ON" state.

If unit 73 does not receive any motion signal from detector 51b over a given time interval, which can possibly be modified by the user, for instance 15 min, processor 75 switches the power supply control for the backlighting of display 23 to the "OFF" state.

In this way, useless energy consumption is avoided, and the backlighting is prevented from remaining "ON" when it could be annoying, for instance when the user is sleeping.

Turning back to Fig. 3, always in accordance with the invention, base station 13 is further equipped with an electronic unit 53 for detecting ambient temperature, humidity and atmospheric pressure, which unit is associated with corresponding detectors 55a, 55b and 55c and with LCD display 23, for displaying the data being measured.

Base station 13 preferably further includes an electronic clock assembly 57 for displaying date and time through display 23 and for the time programming of the functions of base station 13.

Advantageously, said clock assembly 57 includes an electronic device 59 for automatically synchronising the timing of clock assembly 57 based on a standard signal received through the telephone network and coming, for instance, from an accredited institute for exact time broadcasting.

According to the invention, base station 13 further includes a unit 61 for image collection, preferably associated with a communication port, e.g. a USB (Universal Serial Bus) port 63a or a SIM card port 63b, and/or a built-in or removable storage unit 65, for instance a mass memory.

Said collection unit 61 is associated with unit 29 controlling the functions of base station 13 and with control assembly 45.

According to the invention, collection unit 61 is advantageously programmed for processing and displaying, through said display 23, images collected through said communication port 63a, 63b or available in said storage unit 65.

Thanks to pushbuttons 47 associated with control assembly 45, actuating the functions of base station 13, the user can select said images and display them on display 23 in a manner substantially similar to that available in a device for displaying digital images, of the so-called "photo frame" type.

Moreover, thanks to audio playing system 25, also sounds stored in files associated with said images can be played through loudspeaker 27.

According to the invention, the images collected through said communication port 63a, 63b or available in said storage unit 65 can be associated with corresponding codes identifying the calling party in a telephone communication, in particular with the telephone numbers of the calling parties. Said association can take place for instance by assigning said identifying code as the name for each image file. According to the invention, electronic control unit 29 is programmed so as to display, on display 23, the image associated with a particular code identifying a calling party in case of a call from said party. Thus, the call source can be advantageously identified by looking at the contents shown on display 23.

Always in accordance with the invention, said control unit 29, and consequently the functions of station 13, can also be controlled by means of a remote control device and/or through keyboard 87 of said cordless handset 81.

## Claims

1. A base station (13) (master), of a cordless telephone system (11), which base station can be associated with a mobile telephone set or handset (81) of cordless type (slave) and is equipped at least with:
- a support structure (33);
- a power supply unit (17);
- a radio transceiving unit (19);
- an interface (21) for communication with the telephone network:
- an LCD (Liquid Crystal Display) display (23);
- a control assembly (45), including at least one pushbutton set (47) for actuating the functions of said base station (13);
- an electronic unit (29) controlling the functions of said base station (13);
- an image collecting unit (61), associated with a communication port (63a, 63b) and/or a storage unit (65);
**characterised in that** said collecting unit (61) is associated with said unit (29) controlling the functions of the base station (13) and with said control assembly (45), and **in that** said collecting unit (61) is programmed for displaying, through said display (23), images collected through said communication port (63a, 63b) or available in said storage unit (65).

2. The station as claimed in claim 1, wherein said display (23) is a backlit LCD display.

3. The station as claimed in claim 1 or 2, wherein said station further includes an audio playing system (25) for playing and collecting voice and sounds, including a loudspeaker (27a) and a microphone (27b).

4. The station as claimed in claim 1, wherein said support structure (33) includes a pedestal (35) and a casing (37).

5. The station as claimed in claim 1, wherein said support structure (33) is associated with a seat (39) arranged to receive said at least one mobile handset (81).

6. The station as claimed in claim 1, wherein said casing (37) includes a protecting frame (43) surrounding said display.

7. The station as claimed in claim 6, wherein said protecting frame (43) is integrated into the support structure (33).

8. The station as claimed in claim 7, wherein said frame (43) is made so that said display (23) has the appearance of a photo holder, such effect being achieved by making the frame with a colour contrasting with that of said casing (37), and/or by associating special decorations with the frame, and or by making the frame of a valuable material.

9. The station as claimed in claim 2, including a unit (49) for activation, deactivation and automatic adjustment of the backlighting function of said LCD display (23).

10. The station as claimed in claim 9, wherein said unit (49) for activation, deactivation and automatic adjustment is associated with a brightness detector (51).

11. The station as claimed in claim 10, wherein said brightness detector (51) is frontally located on the support structure (33).

12. The station as claimed in any preceding claim, further including a unit (53) for detecting ambient temperature, humidity and atmospheric pressure, associated with corresponding detectors (55a, 55b, 55c) and with the display (23), for displaying the data being measured.

13. The station as claimed in any preceding claim, and further including a clock assembly (57) for displaying date and time through said display (23) and for the time programming of the functions of the base station (13).

14. The station as claimed in claim 1, wherein said clock assembly (57) includes an electronic device (59) for the automatic time synchronisation based on a standard signal received through the telephone network or via radio waves and coming, for instance, from an accredited institute for exact time broadcasting.

15. The station as claimed in any preceding claim, wherein said communication port (63a, 63b) is a USB port or a port for a SIM card.

16. The station as claimed in any preceding claim, wherein said storage unit (65) is a built-in or removable mass memory.

17. The station as claimed in claim 1, wherein said collecting unit (61) is programmed for playing/displaying audio/video files through said display and audio playing system.

18. The station as claimed in any preceding claim, wherein said control unit (29) can be controlled through said control assembly (45) and/or by means of a remote control device and/or by means of a keyboard (87) provided in said cordless handset (81).

19. The station as claimed in any preceding claim, wherein said cordless telephone system operates in accordance with the DECT standard.

20. The station as claimed in claim 4, wherein said radio transceiving unit (19) is housed within said pedestal (35) so as to prevent shielding of radio waves due to the presence of the display (23).

21. The station as claimed in any preceding claim, wherein said images collected through said communication port (63a, 63b) or available in said storage unit (65) can be associated with corresponding codes identifying the calling party in a telephone communication, in particular with the telephone number of the calling party.

22. The station as claimed in claim 21, wherein said electronic control unit (29) is programmed so as to display, on said display (23), the image associated with a particular code identifying the calling party in case of a call from said party.

23. The station as claimed in claim 9, wherein said electronic unit (49) for activation, deactivation and automatic adjustment of the backlighting function of the LCD display is further associated with a motion detector (51b).

24. The station as claimed in claim 23, wherein said motion detector (51b) is an infrared detector.

25. The station as claimed in claim 23 or 24, wherein said electronic unit (49) is so programmed that, when the motion detector (51b) is operating, the backlighting of the LCD display is deactivated if no motion is detected over a given time interval in the environment where the detector (51b) operates.

26. The station as claimed in claim 25, including a pushbutton (71) for activation/deactivation of the backlighting control function, a unit (73) for receiving, managing and encoding the signals received from the motion detector (51b), and a processor (75), associated with said receiving unit (73) and controlling the display (23).
